# EUROPEAN PATENT APPLICATION

(11) **EP 1 241 885 A2**
(43) Date of publication of application: **18.09.2002**
(21) Application number: 02005690.9
(22) Date of filing: 13.03.2002
(51) Int. Cl.: H04N 7/16

(54) **Dynamically changing the control channel for broadband communication devices**

(30) Priority: 14.03.2001 US 808282
(71) Applicant: General Instrument Corporation, Horsham, Pennsylvania 19044 (US)
(72) Inventor: Poli, Christopher, Doylestown, Pennsylvania 18901 (US); Del Sordo, Chris, Souderton, Pennsylvania 18964 (US); Rosenberger, Aniela, Norristown, Pennsylvania 19403 (US); Didomenico, Steve, Mt.Laurel, New Jersey 08054 (US)
(74) Representative: Hoeger, Stellrecht & Partner

(57) **Abstract**

A central control system is provided for broadband communication terminals. A message source generates control information adapted to provide different functionality to different broadband communication terminals or populations of such terminals. At least one transmitter is adapted to transmit control information generated by the message source to the terminals on different control channels. The message source provides control channel configuration messages targeted to different terminal populations or to individual terminals. The control channel configuration messages designate a particular control channel from which the targeted terminal population or individual terminal should thereafter acquire the control information required to control the functionality of the respective terminal(s). The transmitter provides the control information to the respective terminal(s), on the designated control channels, for use until the terminal(s) are directed to another control channel by a new control channel configuration message.

## Description

### BACKGROUND OF THE INVENTION:

The present invention relates to broadband communications, and more particularly to methods and apparatus for dynamically changing the control channel for individual communications terminals or groups of such terminals in a broadband network.

In a typical broadband network, such as a cable television system, satellite television system, subscription network service or the like, subscribers are provided with a broadband communications terminal. A broadband communications terminal contains the electronic equipment that is used, e.g., to connect the subscriber's television, computer and/or other consumer electronic equipment with the broadband network. In the case of a cable or satellite television system, the broadband communications terminal is typically connected to the network through a co-axial wall outlet. Other network connection techniques, such as the use of various standard computer connectors (e.g., universal serial bus "USB" connectors and "Category 5" couplers) are well known in the art.

In the subscription television field, a present day broadband communications terminal is essentially a computer programmed to process the signals from the television network (e.g., cable or satellite) to provide the subscriber with, e.g., cable services. As used hereinafter, the term "cable services" is not intended to be limited to television services received over a cable distribution plant, but can also describe other network services including Internet and data services, which may be delivered over any type of broadband network, including satellite television systems.

Cable services are controlled, e.g., by a cable television company and typically include a number of basic television channels, premium channels which may be provided to subscribers at an additional fee, and pay-per-view events. The broadband communications terminal is programmed to provide these services to the subscriber.

However, the services of the cable company need not be limited to providing television programming. Some cable companies are now offering Internet access and e-mail over the cable network at speeds much faster than are available over conventional telephone lines. It is anticipated in the future that more and more services will be commonly provided over such broadband networks, including video on demand and even basic telephone service. Eventually, each home or office may have a single connection, via the cable network, to all electronic data services. The cable network is also expected to evolve from coaxial cable service to optical fiber service. Currently, optical fiber distribution is in fairly widespread use, except on the "cable drop" to the home. Eventually, fiber is expected to be used in the cable drop, and potentially inside the home itself. The provision of a wholly fiber distribution path is expected to increase the system bandwidth, enabling more services to be provided.

As the cable network and the services provided evolve, the broadband communications terminal must also evolve to be able to provide subscribers with all the services of the cable network. This service evolution will primarily involve changes to the programming in the broadband communications terminal. By upgrading the software or firmware, the broadband communications terminal can be made to perform more efficiently or offer new services as the capabilities of the network evolve.

In order to upgrade the population of broadband communications terminals on a cable network, it is preferable to transmit the new programming to the broadband communications terminals via the network itself. Otherwise, a technician must visit each subscriber to upgrade the broadband communications terminals. Such field upgrades would obviously be at significant expense to the system operator.

The headend is the facility from which the cable network operator broadcasts television signals and provides other services over the cable network. Updated software that is provided to the population of broadband communications terminals can be broadcast from the headend over the cable network. Messages giving instructions or information to the broadband communications terminals can also be broadcast by the headend over the cable network. The messages and objects are provided to the headend(s) by a local, regional, national, or international controller. With a local or regional controller, the controller can be part of the headend. With a national or international controller, the messages are typically broadcast over a satellite.

The messages and objects intended for the broadband communications terminals are typically "packetized," meaning that the data of the message or the software or firmware object is divided into discrete "packets" or segments of data. Each packet includes a header that identifies the message or object of which that packet is a part and identifies the position of that packet's data within that message or object. Consequently, the broadband communications terminal can collect the packets of the message or object it is trying to acquire and reassemble the packetized data into the message or object sent by the headend. The packets of each data object being transmitted bear a unique packet identifier (PID), typically a number, or other identifier within the PID stream that identifies the packets as belonging to a particular message or data object being transmitted.

With messages and objects being packetized, numerous messages and objects can be broadcast simultaneously by interspersing or "carouseling" the packets of the various items being transmitted. The packets of each message or object may be continuously transmitted and retransmitted for a period of time to give broadband communications terminals a continuing opportunity to acquire the message or object. These streams of data packets can be sent on in-band and/or out-of-band (OOB) channels of the cable signal sent from the headend to the broadband communications terminals.

As noted, the system operator will periodically need to upgrade the programming of the broadband communications terminals to accommodate upgrades or additional services offered by the cable system. In some cases, newer broadband communications terminals may be placed in service ready to accommodate the latest system services and protocols and only older terminals may need to be re-programmed. Thus, it is important for the headend to be able to direct specific terminals, or an identified group of terminals, to download and acquire new programming.

Terminal control and programming is typically provided over a control channel. As indicated above, a control channel can be either in-band or out-of-band, and is defined by a frequency and PID number identifier (e.g., an Entitlement Management Message "EMM" Provider ID). The EMM Provider ID provides the identifier of the management control stream within the control channel. All messages in this stream contain the PID number identified by the EMM Provider ID. These messages can contain configuration information, authorization information, updated code objects, and operational information. As the available network services increase, the quantity and type of information required is expected to grow substantially.

Consequently, there is a need in the art for an improved system of managing the control channels and the programming in a population of broadband communications terminals in a network, such as a cable television system or the like. Specifically, there is a need in the art for an improved method and system with which a headend facility (or uplink facility, in the case of a satellite communications system) can direct broadband communications terminals to move to specific control channels for operational messages, and to download and implement specified programming code objects. Control channel movement alleviates bandwidth limitations in a single control channel system. Control channel movement would also support testing and trials of new product offerings, new broadband communications features, or new broadband communications hardware, software or firmware. Control channel movement would also allow for the offering of competitive products on a single cable network or cable system or the like.

### SUMMARY OF THE INVENTION

A central control system is provided for broadband communication terminals. A message source generates control information adapted to provide different functionality to different broadband communication terminals or populations of such terminals. At least one transmitter is adapted to transmit control information generated by the message source to the terminals on different control channels. The message source provides control channel configuration messages targeted to different terminal populations or to individual terminals. The control channel configuration messages designate a particular control channel from which the targeted terminal population or individual terminal should thereafter acquire the control information required to control the functionality of the respective terminal(s). The transmitter provides the control information to the respective terminal(s), on the designated control channels, for use until the terminal(s) are directed to another control channel by a new control channel configuration message.

The control channel configuration messages can, for example, designate a control channel frequency and a control channel packet identifier (PID). The control information may, e.g., include at least one of configuration information, authorization information, updated code objects, and operational information.

In one potential use of the inventive control system, a product test is performed on particular tenninal(s) by providing said terminal(s) with a control channel configuration message designating a test channel from which the particular terminal(s) should thereafter acquire control information. The test channel is used to test features of the terminal. For example, the test channel may be used to test an application running on the terminal.

The terminals may be grouped by predetermined criteria, such that the terminals in different groups are directed by a respective control channel configuration message to a different control channel, for providing customized functionality for the terminals in the group.

In a cable or satellite television embodiment, terminals receive services from subscription television systems, and the predetermined criteria comprise the particular system to which the terminals are subscribed. In such an embodiment, the services may comprise at least one of television services, Internet services or telephone services.

In a further implementation, different terminals use different operating systems. These terminals are directed by respective control channel configuration messages to different control channels, depending on the particular operating system being run.

In yet a further implementation, different terminals use different communication protocols. The terminals are directed by respective control channel configuration messages to a different control channel, depending on the particular communication protocol used.

The invention can also be used to accommodate new terminals. For example, a population of newer terminals can be directed by a respective control channel configuration message to a different control channel than a population of older terminals. In this manner, newer terminals (with additional features) can receive the information they require in the format they require, without rendering the older terminals obsolete.

The control channels used with the invention can comprise out-of-band channels, in-band channels, or a combination of both. The message source can comprise, e.g., a wide-area access controller that communicates the control channel configuration messages to said terminals via local controllers. In a cable television embodiment, the wide-area access controller can comprise, for example, one of a cable television local, regional, national or international access system, the local controllers can comprise cable television headends, and the terminals can comprise cable television terminals.

Corresponding methods and broadband communications terminals are also provided in accordance with the invention.

### BRIEF DESCRIPTION OF THE DRAWINGS

FIG. 1 is a block diagram of a cable network, including a headend and a population of broadband communications terminals; and
FIG. 2 illustrates the segregation of a broadband operator's' terminal population and the migration of terminals between groups.

### DETAILED DESCRIPTION OF THE INVENTION

According to the present invention, a new protocol is defined including a "Control Channel Configuration Message" for directing and enabling a broadband communications terminal or group of terminals to move or re-tune to a defined control channel. As described in Table 1, below, the Control Channel Configuration Message contains all the information necessary to allow the broadband communications terminal to instantly re-tune to the defined control channel. Preferably, the Control Channel Configuration Message is transmitted as a subcommand within the Entitlement Management Message (EMM), which is routinely communicated between the headend and the broadband communications terminals.

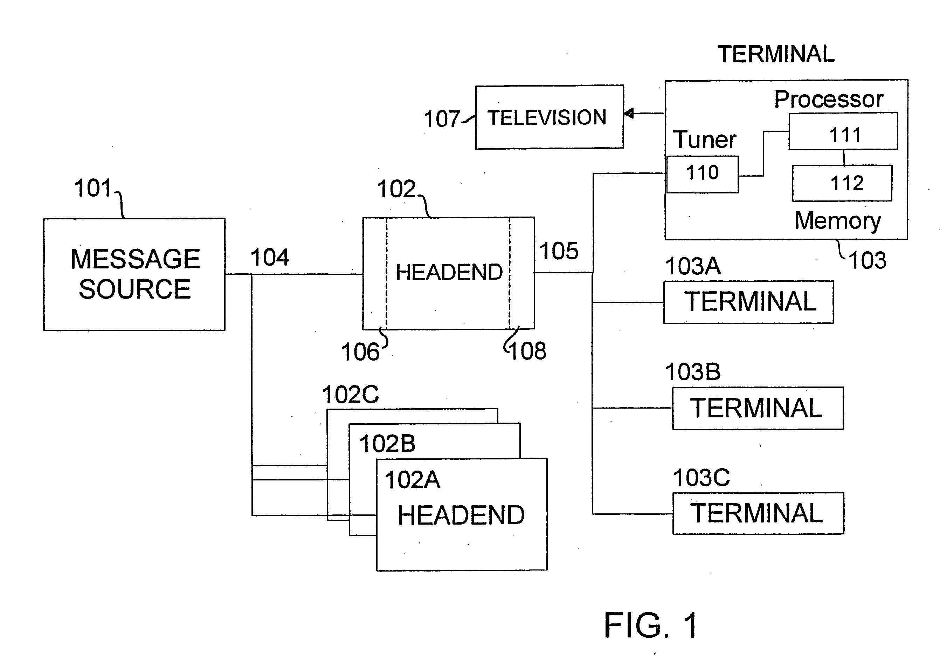

As shown in Figure 1, a message source or controller 101 is connected to a headend facility 102 via controller connection 104. The controller connection may be provided by any known path, e.g., via satellite, local area network (LAN), or the like depending on the specific configuration. The headend facility 102 includes a front end 106 which is used for pre-processing of the incoming signal. Such pre-processing may include, e.g., decryption of the signal, which may be video, audio, or other data. A back end 108 is also provided at the headend for, e.g., re-encryption of the signal before it is communicated to a population of subscriber broadband communications terminals 103 via a cable network 105. Each broadband communications terminal 103 is programmed to provide (e.g., to a television 107) those services available over the cable system that the subscriber has paid to receive. As indicated in Figure 1, additional cable system headends 102, A, 102 B, 102 C ... can be provided, all of which are similar to the headend facility 102.

In addition to providing services, such as a cable television signal, the headend 102 can also transmit code and data objects to the broadband communications terminal 103 over the cable network, and provide connection to other services as well. In the event that a population of broadband communications terminals requires a separate control channel, the controller 101 can transmit the Control Channel Configuration Message of the present invention to cause the terminals 103 to change the control channel to which the group of terminals 103 is currently tuned. Both the old and new control channels are carried over the cable network 105 simultaneously.

The control channel defined on one cable system (e.g., system 102) can vary from the control channel(s) carried on the other cable systems (102A, 102B, 102C ...). Messages intended for the broadband communications terminals can be generated at the message source/controller 101 and/or at the applicable headend. The messages are then delivered to the respective broadband communications terminal population over the cable plant.

According to the invention, the message source/controller 101 sends a Control Channel Configuration Message to a group of terminals 103 in one specific cable system 102. The message is received by the selected broadband communications terminal(s) 103 in the system. Within the network, each broadband communications terminal 103 may have a specific address and one or more multi-cast addresses, such that the controller 101 can direct messages to specific broadband communications terminals or to defined groups of terminals sharing a particular multicast address. Alternatively, a message can be directed to a particular group of terminals using a preamble characteristic (i.e., distinguishing information within the system or broadband communications terminal that can be pre-pended to a message causing specific broadband communications terminals to accept and implement that message). The message is ignored by broadband communications terminals not having the specified preamble characteristics.

Within a broadband communications terminal, a processor 111 controls the frequency and message filtering characteristics of tuner(s) 110. The Control Channel Configuration Message can cause the processor 111 to change the frequency or filtering characteristic of the tuner 110 such that the terminal's control channel is changed. The new frequency and EMM Provider ID are stored in broadband communications terminal memory 112 so that the correct control channel can be immediately tuned when the broadband communications terminal 103 is connected to the cable system 105.

In accordance with the invention, the Control Channel Configuration Message may be broadcast to all of the broadband communications terminals 103, 103A, 103B, 103C ... within the network, multi-cast to a particular group of terminals (e.g., terminals 103A and 103B) or single-cast to a particular terminal (e.g., terminal 103). In this way, the service provider can target only that class or classes of broadband communications terminals needing the alternate control channel. This allows the service provider to account for differences between terminal types and services offered to subscribers connected to the system.

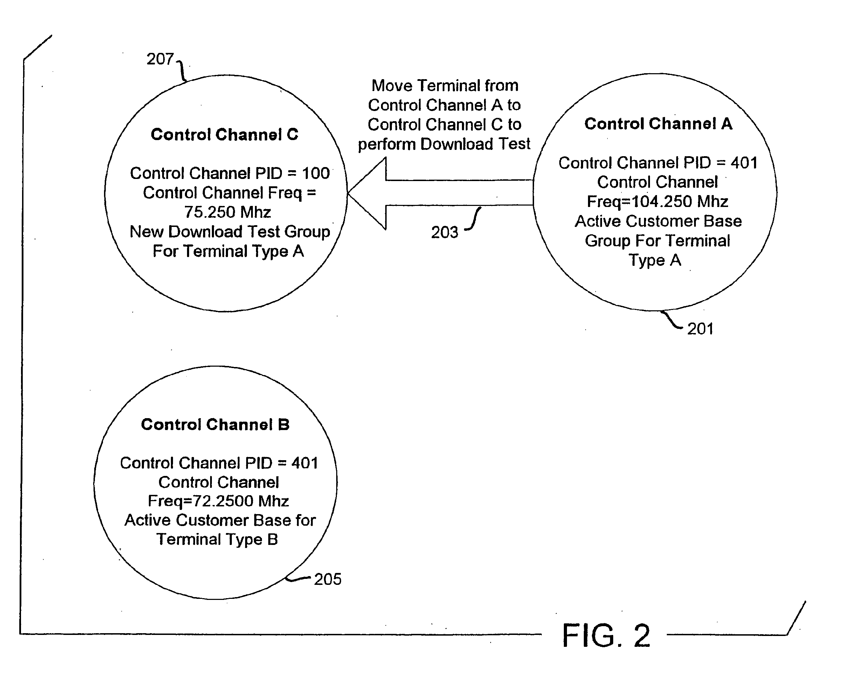

Figure 2 illustrates the segregation of a broadband operator's terminal population based on the Control Channel and the Control Channel PID stream number. This figure also shows an example of how terminals can migrate between groups depending on the operator's need.

In particular, a broadband operator may use three control channels in the simplified illustration provided by Figure 2. These are Control Channel A, designated by reference numeral 201, Control Channel B, designated by reference numeral 205, and Control Channel C, designated by reference numeral 207. Each control channel has a unique PID and frequency, as indicated in Figure 2. In the implementation illustrated in Figure 2, the system operator temporarily moves the "Type A" terminals (or a selected subset thereof) usually serviced by Control Channel A to Control Channel C, which is a special channel set up for testing purposes. For example, as indicated at 203, some or all of the terminals usually serviced by Control Channel A are moved to Control Channel C so that a download test can be performed. In this test, new software is downloaded to the terminals that have been switched to Control Channel C. A determination is then made as to whether the software was properly downloaded into the selected terminals. A determination can also be made as to whether the software runs properly on the selected terminals, and whether the terminals function properly with the new software.

After the test, the selected terminals can be moved back to Control Channel A, or they can continue to use Control Channel C if they are to continue receiving the upgraded functionality provided by the new downloaded software. Once the test is complete, additional Type A terminals can be moved to Control Channel C if and when authorized (e.g., by election by a subscriber and payment of an additional fee), in order to receive the upgraded functionality. In the event that all of the test terminals are switched back to Control Channel A after the test, Control Channel C can be reclaimed by the operator for an alternate or future use.

Control Channel B services an different group of terminals, designated as "Type B" terminals in Figure 2. This channel is distinguished by its own PID (e.g., PID 401) and frequency (e.g., 72.25 MHz). The particular PID and frequency selections for each control channel are decided upon by the system operator and are assigned based on the available transmission frequencies and the available PIDs. It should be appreciated that additional control channels can be provided by a broadband operator, depending on the system capabilities and requirements, and the service offerings.

Table 1, below, illustrates a preferred Control Channel Configuration Message definition in accordance with the invention. It is noted that this is an example protocol only, and that other implementations may be provided for the Control Channel Configuration Message. It is further noted that the broadband communications terminal will automatically perform a warm reset following the successful execution of the control channel configuration subcommand.

**TABLE 1**

| | **Bits** | **Bytes** | **Description** |
|---|---|---|---|
| Control Channel_config (){ | | | |
| EMM_Provider_ID **_included** | **1** | | **7: (no, yes)** |
| operating_environment | 2 | | 6-5: (any, platform_object, reserved, reserved) |
| Initialize | | | **4: (no, yes)** |
| | | | |
| Reserved | 3 | | 3-0: reserved |
| | | | |
| | | | |
| OOB_frequency | 32 | 4 | OOB frequency, lsb = 100Hz |
| ***If (EMM_Provider_ID_included)*** | | | |
| EMM_Provider_ID | 16 | 2 | EMM Provider ID |
| } | | | |

### The following semantics apply to the syntax shown in Table 1:

**Operating_environment:** based on the object class of the platform currently running on the broadband communications. Currently, there are two operating environments defined for DCT5000 (platform_object = ILS or Base Platform and system_object = App OS - i.e., WinCE, NCI, Aperios). *Note that this command applies to platform_object only. Hence setting operating environment = any equates to an operating environment of platform_object.*

**Initialize:** if set to one (yes), the terminal configuration may be reset. If set to zero (no), the terminal will utilize the current configuration on the new control channel.

**OOB_frequency:** the frequency is a 32 bit field giving the frequency value; the frequency unit is 100 Hz (i.e., least significant bit = 100 Hz).

**EMM_Provider_ID:** specifies the subscriber authorization center which "owns" the subscriber broadband communications terminal out-of-band (OOB) processor on the specified OOB frequency. The Conditional_Access message associates EMM stream IDs with the PIDs carrying EMM messages. Current subscriber terminal versions (e.g., the model DCT1000 and DCT2000 digital cable terminals sold by the Broadband Communications Sector of Motorola, Inc., Horsham, Pennsylvania, USA), if carried on the new frequency, assume membership in the first, ordinal listed EMM_provider_id listed in the Conditional Access Message. If the EMM_provider_id is not the same in future subscriber terminals as in earlier terminals, then the EMM PID for the earlier terminals must be the first, ordinal listed EMM PID. The EMM _provider_id and EMM PID for new model terminals may be located anywhere in the conditional access table (CAT). If the EMM_Provider_ID is omitted, the original value will be used.

The present invention allows dynamic movement of the OOB Control Channel for an already deployed broadband communications terminal device. This allows a broadband communications terminal population to have multiple OOB Control Frequencies with the same OOB PID Control Stream Identifier; a single OOB Control Frequency with multiple OOB PID Control Stream Identifiers; or Multiple OOB Control Frequencies each with multiple OOB PID Control Stream Identifiers.

The algorithm of the invention includes sending a particular message to a single broadband communications terminal or a group of broadband communications terminals from the headend controller. This message is sent down the Control Channel that the terminal or group of terminals are currently listening to. For example, in Figure 2, 'Control Channel A' depicts the current control channel frequency as 104.250 MHz and the Control Channel PID stream identifer is 401. In order for the headend controller to target a specific terminal or a group of terminals within that terminal population, the message also includes a "singlecast" (i.e. targeted to a single terminal) or a multicast (i.e. targeted to a group of terminals) address which is filtered on by each terminal.

Once this message is received by the terminal, the message is parsed by the terminal platform software and the Control Channel frequency and PID Stream Identifier are retrieved from the message seen in Table 1. The first check that is done by the platform terminal software is to determine if the current control channel configuration is different than the configuration information retrieved from the message. If both the control channel frequency and the control channel PID stream identifier are the same, then no action is taken. If either the control channel frequency or the control channel PID stream identifier are different, then the algorithm proceeds to the next step.

During the next step, the terminal platform software needs to verify that the new control channel to which it is going to be moved is valid. This check is imperative, since if the control channel is moved to the wrong frequency or PID stream, that terminal may no longer be controlled by the headend. In this situation, retriving the terminal from the field is the only way to rectify the situation. This validation involves first storing in non-volatile memory the current Control Channel Frequency and the current Control Channel PID Stream identifier (i.e. Control Channel A containing 104.250 Mhz and PID 401 as illustrated in Figure 2). Next, the software sets the Control Channel hardware to the new Control Channel Frequency and Control Channel PID stream identifier (i.e. Control Channel C containing 75.250 Mhz and PID 100 in Figure 2). Once the hardware is set, the software looks for a specific message that includes the new AID stream identifier. If this particular PID stream identifier exists, then this stream is validated. If the validation fails, the terminal will retrive the old Control Channel Frequency and Control Channel PID stream identifier from non-volatile memory and return to the old values (i.e. 104.250 Mhz and PID 401). If the new Control Channel is validated, the algorithm moves to the next stage.

The platform software next stores the new Control Channel Configuration in non-volatile memory before proceeding any further. In certain instances, the movement of the terminal will require a complete erasing of the previous configuration messages (i.e. channel maps, hardware addresses, entitlement management data, etc.). In other cases, the new group that the terminal is moving to has the same configuraton data. Therefore, the terminal software retrieves this indication, and if configuration data must be cleared, this data is cleared after a reset command is issued by the software. The next step is to reset the terminal. As the terminal initializes, it sets the Control Channel hardware to the new configuration data (i.e. 75.250 Mhz and PID 100), and the algorithm is complete.

It should now be appreciated that the present invention allows messages to be distributed to client processes in a broadband terminal software platform. The messages can be distributed globally, to selected groups of terminals, or to individual terminals by causing the terminals to tune to a specific in-band or out-of-band channel based on a Control Channel Configuration Message.

Although the invention has been described in accordance with particular embodiments thereof, it should be appreciated that various adaptations and modifications may be made thereto without departing from the scope of the invention as set forth in the following claims.

## Claims

1. A central control system for broadband communications terminals, comprising:
a message source for generating control information adapted to provide different functionality to different broadband communications terminals; and
at least one transmitter adapted to transmit control information generated by said message source to said terminals on different control channels;
wherein:
said message source provides control channel configuration messages targeted to different terminals;
said control channel configuration messages designate a particular control channel from which the targeted terminal should thereafter acquire the control information required to control the functionality of the respective terminal; and
said transmitter provides the control information to the respective terminal on the designated control channel for use until the terminal is directed to another control channel by a new control channel configuration message.

2. A control system in accordance with claim 1, wherein said control channel configuration messages designate a control channel frequency and a control channel packet identifier (PID).

3. A control system in accordance with claim 1 or 2, wherein said control information includes at least one of configuration information, authorization information, updated code objects, and operational information.

4. A control system in accordance with one of claims 1 to 3, wherein a product test is performed on at least one particular terminal by providing said at least one terminal with a control channel configuration message designating a test channel from which the particular at least one terminal should thereafter acquire control information.

5. A control system in accordance with claim 4, wherein said test channel is used to test features of the at least one terminal.

6. A control system in accordance with claim 4, wherein said test channel is used to test an application running on said at least one terminal.

7. A control system in accordance with one of claims 1 to 6, wherein a plurality of terminals are grouped by predetermined criteria, and each group is directed by a respective control channel configuration message to a different control channel for providing customized functionality for the terminals in the group.

8. A control system in accordance with claim 7, wherein said terminals receive services from subscription television systems, and said predetermined criteria comprise the particular system to which the terminals are subscribed.

9. A control system in accordance with claim 8, wherein said services comprise at least one of television services, Internet services or telephone services.

10. A control system in accordance with one of claims 1 to 9, wherein different terminals use different operating systems, and are directed by respective control channel configuration messages to different control channels depending on the particular operating system being run.

11. A control system in accordance with one of claims 1 to 10, wherein different terminals use different communication protocols, and are directed by respective control channel configuration messages to different control channels depending on the particular communication protocol used.

12. A control system in accordance with one of claims 1 to 11, wherein a population of newer terminals is directed by a respective control channel configuration message to a different control channel than a population of older terminals.

13. A control system in accordance with one of claims 1 to 12, wherein at least some of said control channels are out-of-band channels.

14. A control system in accordance with claim 13, wherein all of said control channels are out-of-band channels.

15. A control system in accordance with one of claims 1 to 14, wherein said message source comprises a wide-area access controller that communicates said control channel configuration messages to said terminals via local controllers.

16. A control system in accordance with claim 15, wherein:
said wide-area access controller comprises one of a cable television regional, national or international access system,
said local controllers comprise cable television headends, and
said terminals comprise cable television terminals..

17. A method for controlling a plurality of broadband communication terminals, comprising:
generating control information adapted to provide different functionality to different broadband communication terminals;
generating a plurality of control channel configuration messages targeted to different terminals; and
transmitting said control information to said terminals on different control channels;
wherein:
said control channel configuration messages designate a particular control channel from which the targeted terminal should thereafter acquire the control information required to control the functionality of the respective terminal; and
said transmitter provides the control information to the respective terminal on the designated control channel for use until the terminal is directed to another control channel by a new control channel configuration message.

18. A method in accordance with claim 17, further comprising:
performing a product test on at least one particular terminal by providing said at least one terminal with a control channel configuration message designating a test channel from which the particular at least one terminal should thereafter acquire control information.

19. A method in accordance with claim 18, wherein said test channel is used to test features of the at least one terminal.

20. A method in accordance with claim 18 or 19, wherein said test channel is used to test an application running on said at least one terminal.

21. A method in accordance with one of claims 17 to 20, further comprising:
grouping a plurality of terminals by predetermined criteria,
wherein each group is directed by a respective control channel configuration message to a different control channel for providing customized functionality for the terminals in the group.

22. A method in accordance with claim 21, wherein said terminals receive services from subscription television systems, and said predetermined criteria comprise the particular system to which the terminals are subscribed.

23. A method in accordance with claim 22, wherein said services comprise at least one of television services, Internet services or telephone services.

24. A broadband communications terminal comprising:
a tuner;
a processor for directing said tuner to a particular control channel in response to a control channel configuration message received from a remote service provider;
said processor being responsive to control information received via said particular control channel to control the functionality of said broadband communications terminal;
wherein:
said tuner remains tuned to said particular control channel for receipt of control information until directed to a different control channel by a new control channel configuration message; and
said processor uses the control information received via said particular control channel to control said functionality until control information is received from said different control channel for use by said processor.

25. A terminal in accordance with claim 24, wherein said control channel configuration messages designate a control channel frequency and a control channel packet identifier (PID) which are used by said processor to direct the tuner to a control channel.

26. A terminal in accordance with claim 24 or 25, wherein said control information includes at least one of configuration information, authorization information, updated code objects, and operational information.

27. A terminal in accordance with one of claims 24 to 26, wherein said terminal is a subscription television terminal.

28. A terminal in accordance with one of claims 24 to 27, wherein said terminal is adapted to receive and process at least one of television services, Internet services or telephone services.
